# FASCICULE DE BREVET EUROPEEN

(11) **EP 3 408 570 B1**
(45) Date de publication et mention de la délivrance du brevet: **26.02.2020**
(21) Numéro de dépôt: 17706584.4
(22) Date de dépôt: 27.01.2017
(51) Int. Cl.: H02G 3/32, H01B 7/00

(54) **BOBINE DE GESTION DE SURLONGUEUR D'UN CABLE ELECTRIQUE**
SPULE ZUR HANDHABUNG DER ÜBERLÄNGE EINES ELEKTRISCHEN KABELS
COIL FOR OVERLENGTH HANDLING OF AN ELECTRIC CABLE

(30) Priorité: 28.01.2016 FR 1650695
(43) Date de publication de la demande: 05.12.2018
(73) Titulaire: Safran Electrical & Power, 31702 Blagnac Cedex (FR)
(72) Inventeur: TCHAAOUAOU, Ismaïl, 31702 Blagnac Cedex (FR); RUBIO, Mickael, 31702 Blagnac Cedex (FR); COLIN, Frédéric, 31830 Plaisance du Touch (FR)
(74) Mandataire: Pichat, Thierry
(86) Numéro de dépôt international: PCT/FR2017/050197
(87) Numéro de publication internationale: WO 2017/129923

(56) Documents cités:
- CA-A1- 2 475 261
- US-A- 4 366 939
- US-A1- 2005 145 582
- US-B1- 6 552 270

## Description

La présente invention concerne une bobine de gestion d'une surlongueur d'un câble électrique d'un harnais électrique cheminé en bobine.

Pour faciliter leur fabrication, les avions sont construits en tronçons aboutés les uns aux autres que l'on transporte vers un site d'assemblage.

Chaque tronçon comprend une partie structurelle, un habillage et un circuit de transmission aussi bien fluidique qu'énergétique comme un circuit électrique. Le circuit électrique comprend différents harnais électriques chacun pourvu de plusieurs câbles électriques, les harnais de deux tronçons étant raccordés l'un à l'autre par des connectiques.

Chacun des câbles d'un harnais électrique présente une section utile et une section de surlongueur permettant de créer d'une part une longueur de réparation utilisée pour la réparation du câble lorsque celui-ci est endommagé, et d'autre part, une longueur de goutte d'eau permettant de créer, sur le câble, une zone en U le long de laquelle la condensation d'eau ruisselle pour ne pas atteindre l'extrémité des câbles et, par conséquent les connectiques des harnais.

Pour faciliter la connexion entre les harnais de deux tronçons aboutés il est préférable que les connectiques soient situées à une position prédéterminée sur leur tronçon respectif, c'est-à-dire que les câbles s'étendent tous dans un même plan au moins à une extrémité du harnais de telle sorte que le montage de chacun des câbles dans une connectique commune est facilité.

La position prédéterminée et la section de surlongueur des câbles des harnais obligent à tendre le harnais de sorte que celui-ci ne puisse pas se déplacer lorsque l'avion est en vol, le déplacement d'un harnais créant des vibrations et des bruits parasites désagréables pour les passagers de l'avion.

Le document US6552270B1 divulgue un dispositif qui regroupe des câbles ensemble, comprenant une structure avec un corps central et au moins deux bras s'étendant radialement à partir du corps central, les bras étant positionnés de manière à définir la configuration de l'harnais. Le document CA2475261A1 divulgue un dispositif de gestion de câbles dans lequel chaque câble est maintenu séparément de sorte que le positionnement, la sélection et la récupération des câbles individuels soient facilités sans gêner les autres fils dans l'assemblage.

Une technique connue pour tendre les harnais est de fixer le harnais en au moins un point sur une traverse structurelle du tronçon, au moyen de colliers de serrage, de telle sorte que le harnais présente une alternance de creux et de crêtes par rapport à la traverse, les creux et les crêtes ayant un rôle d'absorption de la surlongueur du harnais.

Cette technique convient particulièrement pour l'installation des harnais sur les tronçons mais présente comme principal inconvénient de nécessiter un nombre important de colliers de serrage et une force importante de la part des opérateurs de montage pour maintenir le harnais sur la traverse étant donné le poids conséquent d'un harnais électrique.

De plus, cette technique ne convient que peu, voire pas du tout, lorsque l'un des câbles doit être réparé.

En effet, la réparation d'un câble réduit la longueur dudit câble, si bien que ledit câble doit être détaché du harnais car sa longueur raccourcie ne lui permet pas de suivre l'ensemble initial des creux et des crêtes du harnais. Lorsqu'un câble est détaché du harnais, il convient de le fixer séparément du harnais soit sur la traverse structurelle, soit sur le harnais lui-même.

La fixation indépendante dudit câble réparé augmente le nombre de colliers de serrage et allonge l'opération de maintenance durant laquelle ledit câble est réparé. L'opération de maintenance est en outre allongée par la nécessité, pour l'opérateur, de retirer le câble à réparer de chacun des colliers, cette opération pouvant être fatigante pour l'opérateur lorsque ledit câble à réparer est coincé et serré par d'autres câbles du harnais.

Enfin, l'alternance de creux et de bosses du harnais requiert une place importante qui ne peut pas être utilisée à d'autres fins comme par exemple la fixation d'autres éléments de l'avion.

L'invention a notamment pour but d'apporter une solution simple, efficace et économique à ce problème.

A cet effet, l'invention propose, un ensemble comprenant :
- un harnais qui comprend plusieurs câbles électriques parallèles entre eux, et
- une bobine qui présente un corps vis-à-vis duquel lesdits câbles sont maintenus, le corps s'étendant parallèlement à une direction d'extension alors commune des câbles électriques,
la bobine comprenant des bras montés sur ledit corps, à une première extrémité, chaque bras ayant une deuxième extrémité sur laquelle est fixé un desdits câbles, la deuxième extrémité de chaque bras étant mobile par rapport au corps, indépendamment de celles des autres, entre une position d'absorption maximale de surlongueur de câble, dans laquelle la deuxième extrémité est écartée radialement du corps, et une position de création maximale de surlongueur de câble, dans laquelle la deuxième extrémité est rapprochée du corps, de sorte que, par adaptation des positions des deuxièmes extrémités des bras par rapport au corps en position d'absorption maximale de surlongueur, en position de création maximale de surlongueur ou dans des positions intermédiaires entre la position d'absorption maximale de surlongueur et la position de création maximale de surlongueur, les câbles s'étendent tous dans un même plan au moins à une extrémité du harnais.

Une telle bobine permet de réaliser simplement et rapidement l'ajustement de chacun des câbles du harnais par rapport aux autres câbles. L'installation et la maintenance du harnais sur l'avion ou sur le tronçon est alors plus aisée pour les opérateurs.

Avantageusement, chaque bras est et monté pivotant sur le corps par sa première extrémité.

La manipulation des bras par les opérateurs se fait alors par un simple mouvement de rotation ne requérant pas l'utilisation d'outils.

Pour guider la rotation des bras et aider l'opérateur de montage dans sa tâche, le corps de la bobine comprend des couples d'équerres faisant saillie radialement au corps vers l'extérieur, les équerres définissant entre elles un logement dans lequel est monté un dit bras.

Selon une particularité, par couple, chaque équerre présente un bord arrondi pourvu de lumières aptes à recevoir au moins un pion solidaire du bras pour définir au moins lesdites positions intermédiaires du bras entre les positions de création et d'absorption de surlongueur de câbles.

L'affinage des réglages est ainsi rendu possible pour chacun des câbles indépendamment des autres.

Selon un mode de réalisation, chaque bras est un bras télescopique comprenant une première partie portant la première extrémité et une deuxième partie télescopique par rapport à la première partie et portant la deuxième extrémité.

Cette variante de réalisation permet également d'affiner les réglages pour chacun des câbles, la deuxième partie pouvant coulisser rapidement et simplement par rapport à la première partie des bras.

Pour définir des positions intermédiaires entre les positions extrémales d'absorption et de création de surlongueur, les bras comprennent au moins un moyen élastiquement déformable pourvu dudit au moins un pion et le corps de la bobine comprend des saillies tubulaires dans lesquelles sont montés à coulissement les bras, les saillies tubulaires étant pourvues de fentes dans lesquelles viennent se loger des pions solidaires des bras pour que la deuxième extrémité des bras puisse adopter sa position d'absorption de surlongueur, de création de surlongueur ou toute position dite intermédiaire.

Le moyen élastiquement déformable pourvu dudit au moins un pion permet de rendre mobile ledit pion afin d'assurer le déplacement des bras pour gérer la longueur des câbles.

Avantageusement, la deuxième extrémité de chaque bras présente une rainure dans laquelle est logé un des câbles du harnais et, pour chaque bras, la bobine comprend au moins un moyen, pour maintenir l'un des câbles sur la deuxième extrémité d'un bras.

Ainsi, les câbles sont parfaitement solidaires des bras ce qui empêche les câbles de glisser sur les bras lors du réglage du harnais.

Selon un mode de réalisation, la bobine comprend deux demi-bobines assemblables l'une à l'autre.

De fait, seule une partie de la bobine peut être utilisée si le harnais comprend peu de câbles, ce qui permet de réduire l'encombrement du harnais au bénéfice de la facilité d'installation sur l'avion et de l'espace alloué aux opérateurs pour la maintenance des harnais.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective montrant un ensemble comprenant un harnais électrique cheminé en bobine et une bobine d'absorption de surlongueur des câbles du harnais électrique ;
- la figure 2 est une vue en perspective montrant la bobine d'absorption de surlongueur de la figure 1 ;
- la figure 3 est une vue de dessous montrant la bobine d'absorption de surlongueur de la figure 1 dans une configuration de pré-assemblage ;
- la figure 4 est une vue de détail montrant un bras de la bobine d'absorption de surlongueur de la figure 1 ;
- la figure 5 est une vue schématique montrant le fonctionnement de la bobine d'absorption de surlongueur des figures précédentes ;
- la figure 6 est une vue schématique montrant une première variante de réalisation de la bobine d'absorption de surlongueur de la figure 1, et
- la figure 7 est une vue schématique montrant une seconde variante de réalisation de la bobine d'absorption de surlongueur de la figure 1.

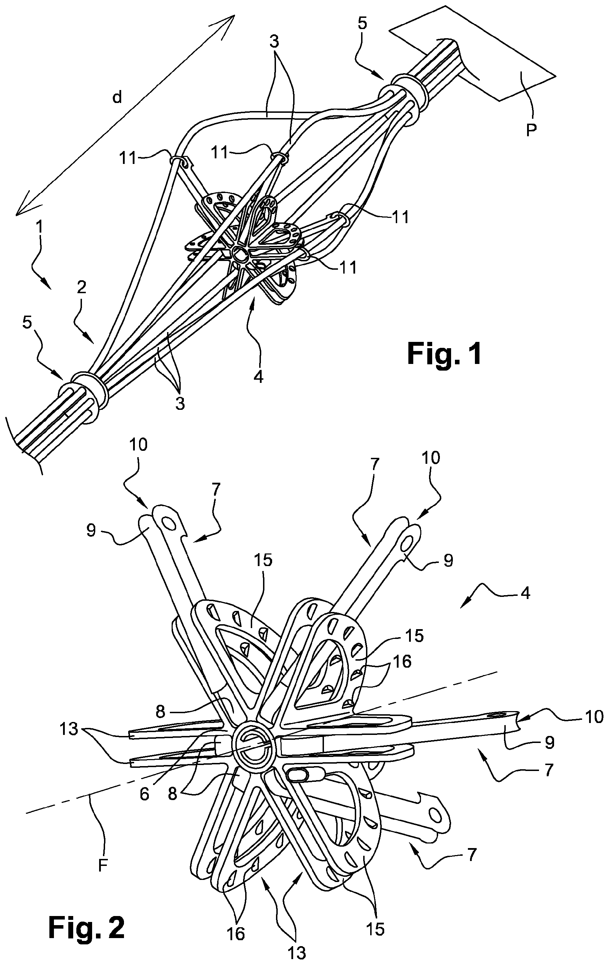

On a représenté, sur la figure 1, un ensemble 1 comprenant :
- un harnais 2 cheminé en bobine qui comprend de plusieurs câbles 3 électriques, et
- une bobine 4 de gestion de surlongueur à laquelle sont fixés lesdits câbles 3 électriques.

Le harnais 2 est ici un harnais 2 électrique qui comprend plusieurs câbles 3 électriques, en l'espèce six, qui sont maintenus ensemble par des passe-câbles 5, le harnais 2 ayant sensiblement la forme d'un fourreau. On entend par un harnais 2 cheminé en bobine que les câbles 3 électriques qui constituent le harnais 2 sont sensiblement parallèles les uns aux autres et ne pas sont tordus ensemble afin de ne pas créer d'impédance homopolaire.

Préalablement au montage d'un harnais 2 sur un tronçon d'un avion, le harnais 2 est assemblé par un opérateur qui débite plusieurs câbles 3 indépendamment les uns des autres et les assembles à l'aide des passe-câbles 5.

Le débit indépendant des câbles 3 rend le harnais 2 irrégulier, c'est à dire que chacune des extrémités des câbles 3 n'est pas exactement dans un même plan P que les extrémités des autres câbles 3.

Pour pallier à cet inconvénient, l'opérateur utilise au moins une bobine 4 de gestion de surlongueur qu'il place entre les câbles 3 du harnais 2.

La bobine 4, représentée en perspective sur la figure 2, comprend un corps 6 qui s'étend selon une direction commune (d) (voir figure 1) d'extension des câbles 3 liés au harnais 2, et plusieurs bras 7 montés sur ledit corps 6, par une première extrémité 8.

Le corps 6, qui peut être creux comme représenté sur les figures, ou plein, définit une fibre (F) neutre du harnais 2, c'est à dire une fibre théorique de longueur parfaite du harnais 2, suivant la direction (d).

Chaque bras 7 de la bobine 4 a une deuxième extrémité 9 sur laquelle est fixé un desdits câbles 3 du harnais 2.

La deuxième extrémité 9 de chaque bras 7 est mobile par rapport au corps 6, indépendamment de celles des autres bras 7, entre une position de d'absorption maximale de surlongueur de câble 3 (ci-après dénommée position d'absorption de surlongueur), dans laquelle la deuxième extrémité 9 est écartée radialement du corps 6, et une position de création maximale de surlongueur de câble 3 (ci-après dénommée position de création de surlongueur), dans laquelle la deuxième extrémité 9 est rapprochée du corps 6. Comme nous le verrons ci-après, la deuxième extrémité 9 des bras 7 peut adopter plusieurs positions intermédiaires entre ses positions d'absorption de surlongueur et de création de surlongueur.

La position d'absorption de surlongueur est utilisée pour raccourcir un câble 3, c'est-à-dire pour déplacer l'extrémité d'un câble 3 lorsque celui-ci est plus long que les autres et la position de création de surlongueur est utilisée pour allonger un câble 3, c'est-à-dire déplacer l'extrémité d'un câble 3 lorsque celui-ci est plus court que les autres.

Ainsi, par adaptation des positions des deuxièmes extrémités 9 des bras 7 par rapport au corps 6 en position d'absorption maximale de surlongueur, en position de création de surlongueur ou dans des positions intermédiaires entre la position d'absorption de surlongueur et la position de création de surlongueur, les câbles 3 s'étendent tous dans un même plan P au moins à une extrémité du harnais 2.

Lorsque le harnais 2 est assemblé par un opérateur, les bras 7 de la bobine 4 sont placés dans une position intermédiaire de sorte à permettre le réglage de la longueur des câbles 3 en déplaçant la deuxième extrémité 9 du bras 3 vers sa position de création de surlongueur ou vers sa position d'absorption de surlongueur selon le cas.

L'utilisation de plusieurs bobines 4 sur un même harnais 2 permet de réaliser plusieurs points de réglage le long du harnais 2 ce qui assure un contrôle précis de la position de chacune des extrémités d'un câble 3 par rapport aux extrémités des autres câbles 3.

Avantageusement, la deuxième extrémité 9 de chaque bras 7 présente une rainure 10 dans laquelle est logé un des câbles 3 du harnais 2. La rainure 10 peut présenter un contour ouvert se resserrant à une extrémité supérieure de sorte à contraindre le câble 3 dans ladite rainure 10 pour que ce dernier suive le mouvement du bras 7 lors du réglage de la position du bras 7.

En complément de la rainure 10, un moyen 11 pour maintenir ledit câble 3 dans ladite rainure 10 peut être prévu. Par exemple, le moyen peut être un collier 11 de serrage traversant un trou 12 pratiqué dans la deuxième extrémité 9 du bras 7 et venant enserrer le bras 7 et le câble 3 pour les rendre solidaires l'un de l'autre, comme cela est représenté sur la figure 1.

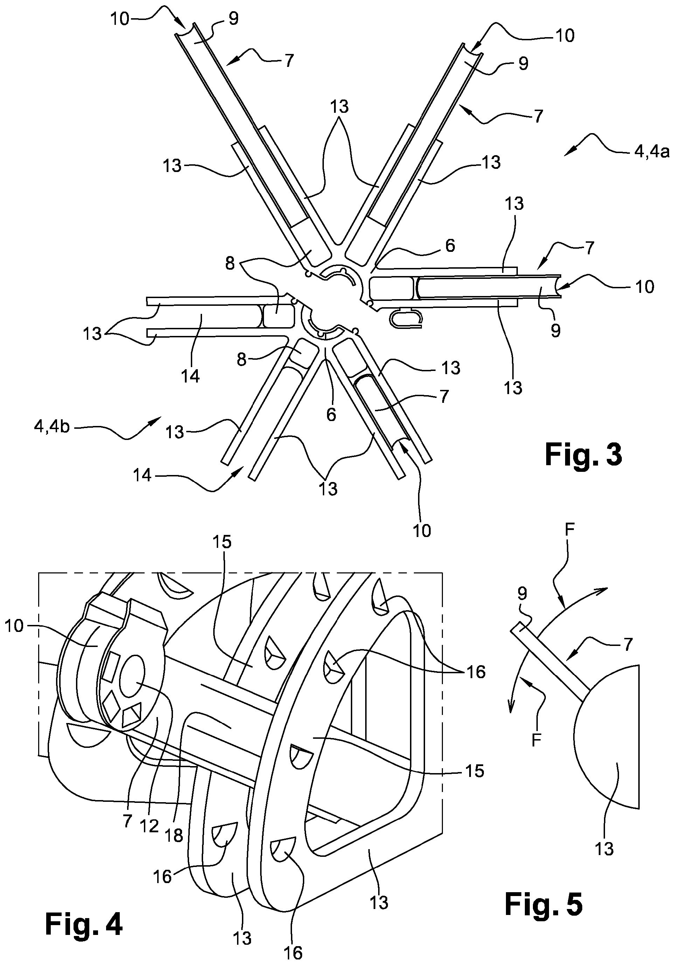

Selon un aspect, illustré en figure 3, la bobine comprend deux demi-bobines 4a, 4b assemblables l'une à l'autre. Ainsi, pour faciliter l'assemblage du harnais 2 électrique, on pourra monter une première partie des câbles 3 sur la première demi-bobine 4a, puis une seconde partie des câbles 3 sur la seconde demi-bobine 4b et, enfin, assembler les deux demi-bobines 4a, 4b, ensemble pour former la bobine 4.

Pour un harnais 2 comprenant peu de câbles 3, on choisira, avantageusement, une bobine 4 adaptée, ayant un nombre de bras 7 identique au nombre de câbles 3 composant le harnais 2, ceci afin d'éviter la création d'une impédance homopolaire qui serait créée par l'utilisation d'une seule demi-bobine 4a, 4b.

Selon un premier mode de réalisation représenté sur les figures 1 à 5, les bras 7 de la bobine 4 sont montés pivotants sur le corps 6, le point de pivot des bras 7 étant réalisé par la première extrémité 8.

Pour guider les bras 7 en rotation la bobine 4 comprend, pour chaque bras 7, un couple d'équerres 13 montées radialement sur le corps 6 et définissant entre elles un logement 14 dans lequel est monté un bras 7.

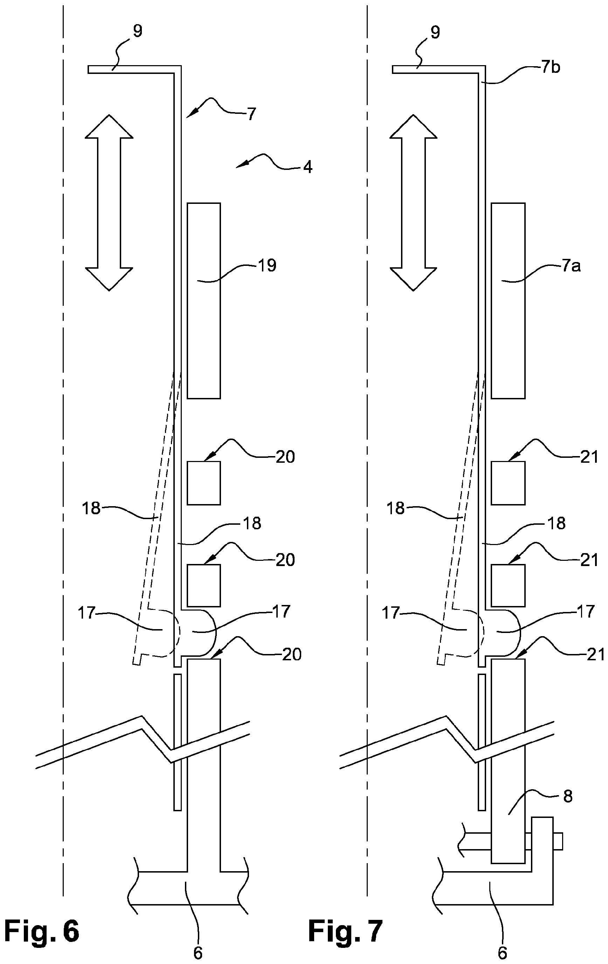

Afin de déterminer des positions intermédiaires des bras 7 entre leur position d'absorption de surlongueur et leur position de création de surlongueur, les équerres 13 présentent, comme illustré sur la figure 4, un bord 15 arrondi pourvu de lumières 16 aptes à recevoir au moins un pion 17 (figures 6 et 7) solidaire d'un bras 7 coopérant avec l'équerre 13, pour définir des positions intermédiaires des bras 7 entre les positions de création de surlongueur et d'absorption de surlongueur.

Ledit au moins un pion 17 des bras 7 est solidaire d'un moyen 18 élastiquement déformable, en l'espèce une languette élastiquement déformable permettant audit au moins un pion 17 de prendre place dans une lumière 16 d'une équerre 13 et de s'en dégager pour autoriser le déplacement du bras 7 d'une position intermédiaire à une autre, à la position d'absorption de surlongueur ou à la position de création de surlongueur.

La position de création de surlongueur est atteinte lorsque ledit au moins un pion 17 est dans une lumière 16 la plus proche du corps 6 et la position d'absorption de surlongueur est atteinte lorsque ledit au moins un pion 17 est dans une lumière 16 la plus éloignée du corps 6, c'est-à-dire la lumière 16 la plus éloignée de l'axe central du corps ou encore de la fibre (F) neutre de la bobine 4. Le mouvement des bras est représenté de manière schématique sur la figure 5 par les flèches F.

De préférence, les bras 7 comprennent deux pions 13, chaque pion 17 étant apte à coopérer avec les lumières 16 de l'une des équerres 13 d'un couple.

Selon un second mode de réalisation, représenté sur la figure 6, les bras 7 sont télescopiques.

A cet effet, le corps 6 comprend plusieurs saillies tubulaires 19 le long desquelles sont reçus les bras 7. Les saillies tubulaires 19 peuvent être venues de matière avec le corps 6 ou rapportées sur le corps 6 puis solidarisées sur celui-ci à l'aide d'un moyen approprié.

Chaque saillie tubulaire19 comprend au moins une série de fentes 20 aptes à recevoir au moins un pion 17 solidaire d'un bras 7 monté à coulissement dans la saillie tubulaire 19, pour définir des positions intermédiaires des bras 7 entre les positions de création de surlongueur et d'absorption de surlongueur.

La position de création de surlongueur est atteinte lorsque ledit au moins un pion 17 est dans une fente 20 la plus proche du corps 6 et la position d'absorption de surlongueur est atteinte lorsque ledit au moins un pion 17 est dans une fente 20 la plus éloignée du corps 6.

Ledit au moins un pion 17 des bras 7 est solidaire d'un moyen 18 élastiquement déformable, en l'espèce une languette élastiquement déformable permettant audit au moins un pion 17 de prendre place dans une fente 20 d'une saillie tubulaire 19 et de s'en dégager pour autoriser le déplacement du bras 7 d'une position intermédiaire à une autre, à la position d'absorption de surlongueur ou à la position de création de surlongueur.

De préférence, les saillies tubulaires 19 comprennent deux séries de fentes 20 opposées l'une à l'autre et les bras 7 comprennent deux pions 17, chaque pion 17 étant apte à coopérer avec les fentes 20 de l'une séries de la saillie tubulaire 19.

Selon un troisième mode de réalisation représenté sur la figure 7, la bobine 4 est une combinaison des deux premiers modes de réalisation.

Dans ce troisième mode de réalisation, les bras 7 comprennent une première partie 7a par lequel le bras 7 est monté pivotant sur le corps 6, et une deuxième partie 7b télescopique par rapport à la première partie 7a et portant la deuxième extrémité 9.

La première partie 7a de chaque bras 7 comprend au moins une série d'ouvertures 21 aptes à recevoir au moins un pion 17 solidaire de la deuxième partie 7b du bras 7 pour définir des positions intermédiaires des bras 7 entre les positions de création de surlongueur et d'absorption de surlongueur.

La position de création de surlongueur est atteinte lorsque ledit au moins un pion 17 est dans une ouverture 21 la plus proche du corps 6 et la position d'absorption de surlongueur est atteinte lorsque ledit au moins un pion 17 est dans une ouverture 21 la plus éloignée du corps 6.

Ledit au moins un pion 17 de la deuxième partie 7b des bras 7 est solidaire d'un moyen élastiquement déformable, en l'espèce une languette élastiquement déformable permettant audit au moins un pion 17 de prendre place dans une ouverture 21 de la première partie 7a d'un bras 7 et de s'en dégager pour autoriser le déplacement de la deuxième partie 7b du bras d'une position intermédiaire à une autre, à la position d'absorption de surlongueur ou à la position de création de surlongueur.

De préférence, la première partie 7a des bras 7 comprend deux séries d'ouvertures 21 opposées l'une à l'autre et la deuxième partie 7b des bras 7 comprend deux pions 17, chaque pion 17 étant apte à coopérer avec les ouvertures 21 de l'une des séries de la première partie 7a des bras 7.

En variante de la languette élastiquement déformable, le moyen 18 élastiquement déformable pourrait être un ressort monté dans une cage et poussant le pion 17 à faire saillie du bras 7. Ainsi, une action sur le pion 17, à l'encontre du ressort, permettra de déplacer le bras 7 et une absence d'action sur le pion 17 provoquera la saillie du pion 17 du bras 7, notamment pour verrouiller le bras 7 dans une position souhaitée.

L'ensemble qui vient d'être décrit, et notamment la bobine 4, offre de nombreux avantages.

Premièrement, la bobine 4 est simple d'utilisation puisque le bras 7 sont manipulables simplement et indépendamment les uns des autres. Ainsi, l'ajustement d'un seul des câbles 3 d'un harnais 2 est simple, rapide et précis.

Deuxièmement, l'assemblage des avions est facilité puisque les harnais 2 sont assemblés avant d'être montés sur les tronçons. La longueur des harnais 2 peut alors être réglée de manière quasi définitive avant son positionnement sur le tronçon, les réglages finaux pouvant être réalisés rapidement et simplement in situ comme nous l'avons vu précédemment.

Troisièmement, la maintenance, et notamment la réparation de l'un des câbles 3 du harnais 2 est facilitée. En effet, chacun des câbles 3 peut être réparé indépendamment des autres en l'allongeant par simple manipulation d'un bras 7 associé d'une ou plusieurs bobines 4. La manipulation des bras 7 permet, en outre, de conserver l'avantage des surlongueurs de sorte que les normes de sécurité soient respectées notamment concernant la surlongueur de goutte d'eau.

Enfin, les bobines 4 sont simples de conception et de réalisation et facilitent le montage des harnais 2 puisque seuls des moyens de maintien des câbles sont nécessaires, par exemple des colliers 11 de serrage. Les opérateurs de montage n'ont alors pas besoin d'outils coupants tels que des pinces ou des lames pour le réglage de la longueur de chacun des câbles 3 composant un harnais 2, ces outils pouvant présenter un risque d'endommagement des câbles 3 à la suite d'une mauvaise manipulation.

## Revendications

1. Ensemble (1) pour former une route électrique, l'ensemble comprenant :
- un harnais (2) qui comprend plusieurs câbles (3) électriques parallèles entre eux, et
- une bobine (4) qui présente un corps (6) vis-à-vis duquel lesdits câbles (3) sont maintenus, le corps (6) s'étendant parallèlement à une direction (d) d'extension alors commune des câbles (3) électriques, et des bras (7), **caractérisé en ce que** les bras (7) comportent chacun une première extrémité (8) et une deuxième extrémité (9), la deuxième extrémité (9) de chaque bras (7) étant mobile par rapport au corps (6), les bras (7) étant montés sur ledit corps (6), à la première extrémité (8), un desdits câbles (3) étant fixé sur la deuxième extrémité (9) de chacun desdits bras, la deuxième extrémité (9) de chaque bras (7) étant mobile indépendamment de celles des autres bras, entre une position d'absorption maximale de surlongueur de câble (3), dans laquelle la deuxième extrémité (9) est écartée radialement du corps (6), et une position de création maximale de surlongueur de câble (3), dans laquelle la deuxième extrémité (9) est rapprochée du corps (6), de sorte que, par adaptation des positions des deuxièmes extrémités (9) des bras (7) par rapport au corps (6) en position d'absorption maximale ou de création maximale de surlongueur, ou dans des positions intermédiaires entre lesdites positions d'absorption maximale et de création maximale de surlongueur, les câbles (3) s'étendent tous dans un même plan (P) au moins à une extrémité du harnais (2).

2. Ensemble (1) selon la revendication précédente, **caractérisé en ce que** chaque bras (7) est monté pivotant sur le corps (6) par sa première extrémité (8).

3. Ensemble (1) selon la revendication précédente, **caractérisé en ce que** le corps (6) de la bobine (4) comprend des couples d'équerres (13) faisant saillie radialement au corps (6) vers l'extérieur, les équerres (13) définissant entre elles un logement (14) dans lequel est monté un dit bras (7).

4. Ensemble (1) selon la revendication précédente, **caractérisé en ce que**, par couple, les équerres (13) présentent chacune un bord (15) arrondi pourvu de lumières (16) aptes à recevoir au moins un pion (17) solidaire du bras (7) pour définir lesdites positions intermédiaires du bras (7).

5. Ensemble (1) selon la revendication 1, **caractérisé en ce que** chaque bras (7) est un bras (7) télescopique comprenant une première partie (7a) portant la première extrémité (8) et une deuxième partie (7b) télescopique par rapport à la première partie (7a) et portant la deuxième extrémité (9).

6. Ensemble (1) selon la revendication 1, **caractérisé en ce que** le corps (7) de la bobine (4) comprend des saillies tubulaires (19) le long desquelles sont montés à coulissement les bras (7), les saillies tubulaires (19) étant pourvues de fentes (20) dans lesquelles viennent se loger des pions (17) solidaires des bras (7) pour que la deuxième extrémité (9) des bras (7) puisse adopter la position maximale d'absorption de surlongueur, la position de création maximale de surlongueur ou lesdites positions intermédiaires.

7. Ensemble (1) selon l'une des revendications 4 à 6, **caractérisé en ce que** les bras (7) comprennent au moins un moyen (18) élastiquement déformable pourvu dudit au moins un pion (17), pour rendre mobile ledit pion (17).

8. Ensemble (1) selon l'une quelconque des revendications précédentes, **caractérisé en ce que** la deuxième extrémité (9) de chaque bras (7) présente une rainure (10) dans laquelle est logé un des câbles (3) du harnais (2).

9. Ensemble (1) selon l'une quelconque des revendications précédentes, **caractérisé en ce que**, pour chaque bras (7), la bobine (4) comprend au moins un moyen (11) pour maintenir l'un des câbles (3) sur la deuxième extrémité (9) d'un bras (7).

10. Ensemble (1) selon l'une quelconque des revendications précédentes, **caractérisé en ce que** la bobine (4) comprend deux demi-bobines (4a, 4b) assemblables l'une à l'autre.

## Patentansprüche

1. Anordnung (1) zum Bilden einer Stromtrasse, wobei die Anordnung enthält:
- einen Kabelbaum (2), der mehrere parallel zueinander verlaufende Stromkabel (3) enthält, und
- eine Spule (4), die einen Körper (6) aufweist, gegenüber welchem die Kabel (3) gehalten werden, wobei sich der Körper (6) parallel zu einer dann gemeinsamen Erstreckungsrichtung (d) der Stromkabel (3) erstreckt, sowie Arme (7) aufweist,
**dadurch gekennzeichnet, dass** die Arme (7) jeweils ein erstes Ende (8) und ein zweites Ende (9) aufweisen, wobei das zweite Ende (9) jedes Arms (7) relativ zum Körper (6) beweglich ist, wobei die Arme (7) mit dem ersten Ende (8) am Körper (6) montiert sind, wobei eines der Kabel (3) am zweiten Ende (9) jedes der Arme befestigt ist, wobei das zweite Ende (9) jedes Arms (7) unabhängig von denen der anderen Arme beweglich ist zwischen einer Position maximaler Aufnahme von Kabelüberlänge des Kabels (3), in der das zweite Ende (9) radial vom Körper (6) beabstandet ist, und einer Position maximaler Schaffung von Kabelüberlänge des Kabels (3), in der das zweite Ende (9) näher an den Körper (6) herangeführt ist, so dass die Kabel (3) durch Anpassen der Positionen der zweiten Enden (9) der Arme (7) in Bezug auf den Körper (6) in der Position maximaler Aufnahme bzw. maximaler Schaffung von Überlänge oder in Zwischenpositionen zwischen der Position maximaler Aufnahme und der Position maximaler Schaffung von Überlänge sich alle in einer gleichen Ebene (P) zumindest an einem Ende des Kabelbaums (2) erstrecken.

2. Anordnung (1) nach dem vorangehenden Anspruch,
**dadurch gekennzeichnet, dass**
jeder Arm (7) mit seinem ersten Ende (8) schwenkbar am Körper (6) gelagert ist.

3. Anordnung (1) nach dem vorangehenden Anspruch,
**dadurch gekennzeichnet, dass**
der Körper (6) der Spule (4) Paare von Winkelhalterungen (13) enthält, die radial vom Körper (6) nach außen abstehen, wobei die Winkelhalterungen (13) zwischen sich eine Aufnahme (14) definieren, in welcher ein Arm (7) gelagert ist.

4. Anordnung (1) nach dem vorangehenden Anspruch,
**dadurch gekennzeichnet, dass**
paarweise die Winkelhalterungen (13) jeweils einen abgerundeten Rand (15) aufweisen, der mit Öffnungen (16) versehen ist, die dazu geeignet sind, zumindest einen fest mit dem Arm (7) verbundenen Zapfen (17) aufzunehmen, um die Zwischenpositionen des Arms (7) zu definieren.

5. Anordnung (1) nach Anspruch 1,
**dadurch gekennzeichnet, dass**
jeder Arm (7) ein Teleskoparm (7) ist, der einen das erste Ende (8) tragenden ersten Abschnitt (7a) und einen zweiten Abschnitt (7b) aufweist, der bezüglich des ersten Abschnitts (7a) teleskopartig ausgeführt ist und das zweite Ende (9) trägt.

6. Anordnung (1) nach Anspruch 1,
**dadurch gekennzeichnet, dass**
der Körper (7) der Spule (4) rohrförmige Vorsprünge (19) enthält, entlang derer die Arme (7) gleitbeweglich gelagert sind, wobei die rohrförmigen Vorsprünge (19) mit Schlitzen (20) versehen sind, in denen fest mit den Armen (7) verbundene Zapfen (17) aufgenommen sind, damit das zweite Ende (9) des Arme (7) die Position maximaler Aufnahme von Überlänge, die Position maximaler Schaffung von Überlänge oder die Zwischenpositionen einnehmen kann.

7. Anordnung (1) nach einem der Ansprüche 4 bis 6,
**dadurch gekennzeichnet, dass**
die Arme (7) zumindest eine elastisch verformbare Einrichtung (18) enthalten, die mit dem zumindest einen Zapfen (17) versehen ist, um den Zapfen (17) beweglich zu machen.

8. Anordnung (1) nach einem der vorangehenden Ansprüche,
**dadurch gekennzeichnet, dass**
das zweite Ende (9) jedes Arms (7) eine Nut (10) aufweist, in welche eines der Kabel (3) des Kabelbaums (2) aufgenommen ist.

9. Anordnung (1) nach einem der vorangehenden Ansprüche,
**dadurch gekennzeichnet, dass**
für jeden Arm (7) die Spule (4) zumindest eine Einrichtung (11) zum Halten eines der Kabel (3) an dem zweiten Ende (9) eines Arms (7) enthält.

10. Anordnung (1) nach einem der vorangehenden Ansprüche,
**dadurch gekennzeichnet, dass**
die Spule (4) zwei Halbspulen (4a, 4b) enthält, die zusammenfügbar sind.

## Claims

1. An assembly (1) intended to form an electrical path, said assembly comprising:
- a harness (2) which comprises several electrical cables (3) parallel to each other, and
- a spool (4) which has a body (6) which said cables (3) are held to, with the body (6) extending parallel to a common direction (d) of extension of the electrical cables (3), and arms (7),
**characterized in that** each arm (7) comprises a first end (8) and a second end (9), with the second end (9) of each arm (7) being movable with respect to the body (6), the arms (7) being mounted on said body (6) at the first end (8), one of said cables (3) being fixed to the second end (9) of each of said arms, the second end (9) of each arm (7) being movable independently of the other arms, between a position for a maximum absorption of overlength of cable (3), in which the second end (9) is radially remote from the body (6), and a position for a maximum creation of overlength of cable (3), in which the second end (9) is closer to the body (6), so that, by adjusting the positions of the second ends (9) of the arms (7) with respect to the body (6) in said position for maximum absorption or in said position for maximum creation of overlength, or in intermediate positions between said positions for maximum absorption and for maximum creation of overlength, the cables (3) all extend in a same plane (P) at least at one end of the harness (2).

2. An assembly (1) according to the preceding claim, **characterized in that** each arm (7) is pivotally mounted on the body (6) at its first end (8).

3. An assembly (1) according to the preceding claim, **characterized in that** the body (6) of the spool (4) comprises pairs of brackets (13) projecting outwards radially to the body (6), with the brackets (13) defining between same a housing (14) in which one said arm (7) is mounted.

4. An assembly (1) according to the preceding claim, **characterized in that**, in pairs, the brackets (13) each have a rounded edge (15) provided with openings (16) adapted to receive at least one pin (17) integral with the arm (7) to define said intermediate positions of the arm (7).

5. An assembly (1) according to claim 1, **characterized in that** each arm (7) is a telescopic arm (7) comprising a first portion (7a) bearing the first end (8) and a second portion (7b) telescopic with respect to the first portion (7a) and bearing the second end (9).

6. An assembly (1) according to claim 1, **characterized in that** the body (7) of the spool (4) comprises tubular projections (19) along which the arms (7) are slidingly mounted, with the tubular projections (19) being provided with slots (20) in which pins (17) integral with the arms (7) are received so that the second end (9) of the arms (7) can adopt the position for maximum absorption of overlength, the position for maximum creation of overlength or said intermediate positions.

7. An assembly (1) according to one of claims 4 to 6, **characterized in that** the arms (7) comprise at least one elastically deformable means (18) provided with said at least one pin (17), to make said pin (17) movable.

8. An assembly (1) according to any one of the preceding claims, **characterized in that** the second end (9) of each arm (7) has a groove (10) in which one of the cables (3) of the harness (2) is received.

9. An assembly (1) according to any one of the preceding claims, **characterized in that**, for each arm (7), the spool (4) comprises at least one means (11) for holding one of the cables (3) on the second end (9) of one of said arms (7).

10. An assembly (1) according to any one of the preceding claims, **characterized in that** the spool (4) comprises two half-spools (4a, 4b) which can be assembled together.
